# EUROPEAN PATENT SPECIFICATION

(11) **EP 0 396 311 B1**
(45) Date of publication and mention of the grant of the patent: **26.03.1997**
(21) Application number: 90304450.1
(22) Date of filing: 25.04.1990
(51) Int. Cl.: G06T 3/60

(54) **Image processing apparatus and method**
Bildverarbeitungsverfahren und -gerät
Méthode et appareil de traitement d'image

(30) Priority: 28.04.1989 JP 107295/89
(43) Date of publication of application: 07.11.1990
(73) Proprietor: International Business Machines Corporation, Armonk, N.Y. 10504 (US)
(72) Inventor: Itoh, Masaharu, Yamato-shi, Kanagawa-ken (JP)
(74) Representative: Bailey, Geoffrey Alan

(56) References cited:
- EP-A- 0 254 300
- DE-A- 3 419 063
- DE-A- 3 629 984
- I.E.E.E. TRANSACTIONS ON ACCOUSTICS, SPEECH AND SIGNAL PROCESSING ASSP-35 no. 4, April 1987, NEW YORK pages 527 - 531 NUIO TSUCHIDA ET AL. 'Hardware for Image Rotation by Twice Skew Transformations'

## Description

The present invention relates to an image processing apparatus and method for rotating an original image comprising an array of picture elements.

The Affine transformation has been used to rotate an original image comprising picture elements (pels) arranged in rows in the X axis and columns in the Y axis. The Affine transformation on a two-dimensional plane is represented as follows:${\text{x' = ax + by + t}}_{\text{x}}$${\text{y' = cx + dy + t}}_{\text{y}}$

The Affine transformation may be decomposed into a linear transformation and a translation, as follows:

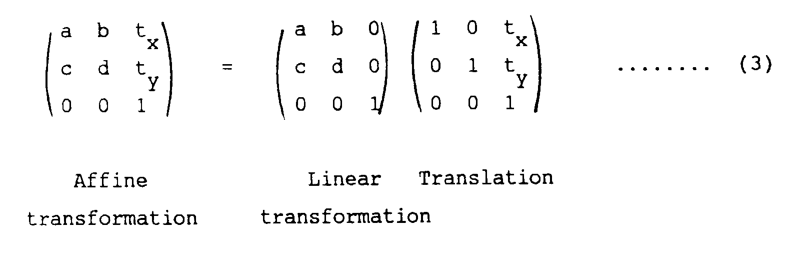

The translation represents a shift in the X and Y directions and could be eliminated in an image rotation. The Affine transformation for an image rotation is expressed as follows:

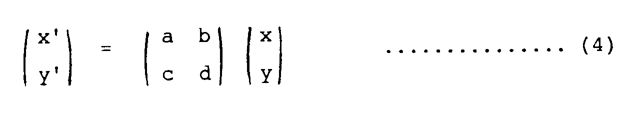

A picture element (pel) at a coordinate address (x, y) is moved to a coordinate address (x', y'). The linear transformation may be decomposed into two shears and two scale transformation matrices (5.1) - (5.6), as follows: 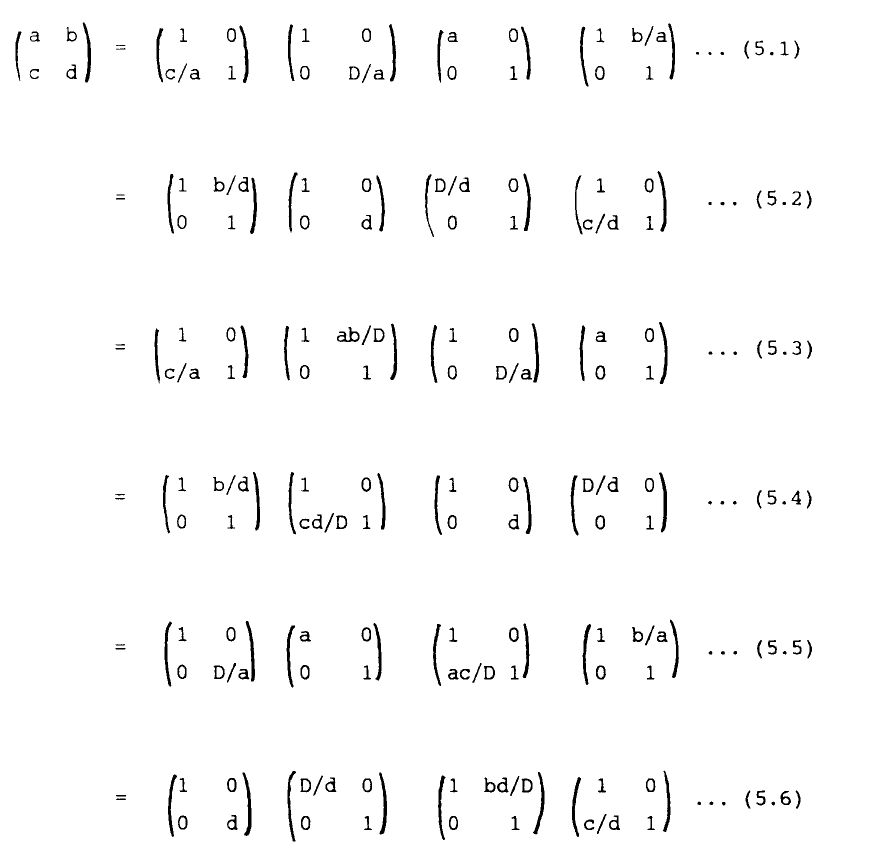 where D = (ad - bc)

Two approaches using the equation (5.3) to perform the Affine transformation have been made to rotate an original image.

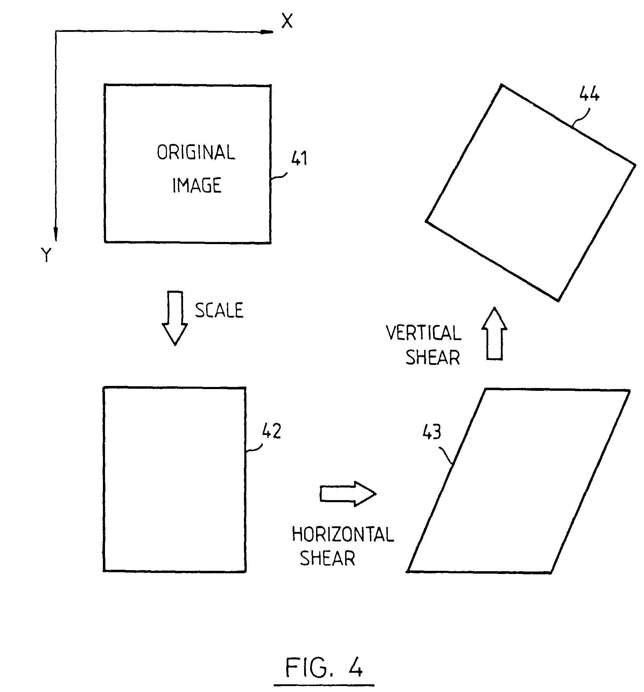

The first approach is shown in Fig. 4. An original image 41 is stored in an image memory. In the first step, the original image is scaled in both the X and Y directions. That is, the number of pels in the image in the X direction is reduced and the number of pels in the Y direction is increased, such that the total number of pels of the original image 41 is equal to the total number of pels in the rotated image 44. The term "scale" means the increase or reduction of the pels in one axis of the image. The scaled image 42 is temporarily stored in a first intermediate memory space, not shown. The third and fourth matrices in the equation (5.3) correspond to the scaling operations. In the second step, all of the pels of the scaled image 42 are sequentially read out, and the scaled image 42 is horizontally sheared. The second matrix in the equation (5.3) corresponds to the horizontal shear operation. In the horizontal shear operations, the vertical columns of the scaled image 42 are inclined, while the horizontal rows are maintained in the X direction. In other words, the addresses of the pels of the scaled image 42 are horizontally shifted. The horizontally sheared image 43 is temporarily stored in a second intermediate memory space, not shown. In the third step, all of the pels of the horizontally sheared image 43 are sequentially read out, and the image 43 is vertically sheared. The first matrix in the equation (5.3) corresponds to the vertical shear operation. In the vertical shear operation, the horizontal rows of the image 43 are inclined. In other words, the addresses of the all pels of the image 43 are vertically shifted. The rotated image 44 is stored in an output memory, not shown. The horizontal shift and vertical shift operations are known as "transvection", but are called the horizontal shear and the vertical shear in the present specification. The above described rotating operations require two store operations into the first and second intermediate memory spaces, and the calculation of the addresses of all of the pels of the image to perform both the horizontal and vertical shear operations which requires a relatively long period, so that the operator must wait for the long time period after entering the rotation commands to the image processor.

IBM Technical Disclosure Bulletin, Vol 13, No 11, April 1971, pp 3267-3268, discloses the Affine transformation for rotating a two dimensional binary image. This article describes a different operational sequence from the above described rotating operations and requires intermediate memory spaces.

A second approach is shown in IBM Technical Disclosure Bulletin, Vol 28, No 10, March 1986, pp 4330-4331. The article discloses the use of the equation (5.3), and scales the original image in the X and Y directions in accordance with the third and fourth matrices, and performs the horizontal and vertical shear operations of the second and first matrices of the equation (5.3). In the article, however, the addresses of all the pels of the scaled image are calculated in accordance with the second and first matrices to generate the horizontally and vertically sheared addresses, which are the addresses in an output memory. Therefore, the rotated image is directly stored in the output memory without requiring the intermediate memory spaces in the first approach. Although the article reduces the processing time in the comparison with the first approach, the article still requires the time period for calculating the addresses of all the pels of the scaled image. A similar technique is described in "IEEE Transactions on Acoustics, Speech and Signal Processing ASSP-35, No 4, April 1987, New York, page 527-531: Hardware for Image Rotation by Twice Skew Transformations".

In accordance with the present invention, there is now provided image processing apparatus for rotating an original image composed of picture elements arranged in rows and columns through a selected rotation angle and generating a rotated version of the image in an output image memory, the apparatus comprising: scaling means for generating each row of a scaled version of the original image in response to scaling values calculated from the selected rotation angle; characterised in that the apparatus comprises: shearing means responsive to values of horizontal and vertical shears determined by the selected rotation angle, for performing horizontal shear and vertical shear operations on the first picture element of each row of the scaled version and generating respective addresses in the output image memory into which the first picture elements after shearing are to be stored; line generator means, responsive to the respective addresses of the first picture elements, the value of vertical shear and a control value generated with the vertical shear, for generating addresses in the output image memory into which all the remaining picture elements of the rows of the scaled version are to be stored; and control means for storing all the first picture elements and all the remaining picture elements of the rows in the generated addresses of the output image memory to produce the rotated version of the original image.

Viewing the present invention from another aspect, there is now provided a method for rotating an original image composed of picture elements arranged in rows and columns through a selected rotation angle and generating a rotated version of the image in an output image memory, the method comprising: generating each row of a scaled version of the original image in response to scaling values calculated from the selected rotation angle; characterised in that the method comprises: performing, in response to values of horizontal and vertical shears determined by the selected rotation angle, horizontal shear and vertical shear operations on the first picture element of each row of the scaled version; generating respective addresses in the output image memory into which the first picture elements after shearing are to be stored; generating, in response to the respective addresses of the first picture elements, the value of vertical shear and a control value generated with the vertical shear, addresses in the output image memory into which all the remaining picture elements of the rows of the scaled version are to be stored; and storing all the first picture elements and all the remaining picture elements of the rows in the generated addresses of the output image memory to produce the rotated version of the original image.

Preferably the scaling means includes a Y-scale unit for scaling the original image in the column direction, and an X-scale unit for scaling the original image in the row direction. The means for performing the horizontal shear and vertical shear operations includes an H-shear unit which performs the horizontal shear operations on the first pel of the pel row, and a V-shear unit which performs the vertical shear operations on the horizontally sheared pel and generates the control value.

The line generator means performs vertical alignment of address transitions of the horizontally adjacent pels in all the pel rows in the rotated image in the output image memory.

Therefore the present invention provides high-speed image processing apparatus and method for rotating the two dimensional original image in comparison with the prior art.

In order that the invention may be fully understood a preferred embodiment thereof will now be described, by way of example only, with reference to the accompanying drawings in which:

Fig. 1 shows the block diagram of an image processing apparatus in accordance with the present invention.

Figs. 2 and 3 show the relationship of the original image and the rotated image.

Fig. 4 shows the prior art image rotation technology.

Fig. 5 shows the flow chart of the algorithm in accordance with the present invention, and

Figs. 6A and 6B show the operations of the Bresenham's line generator for generating the addresses of the pel row.

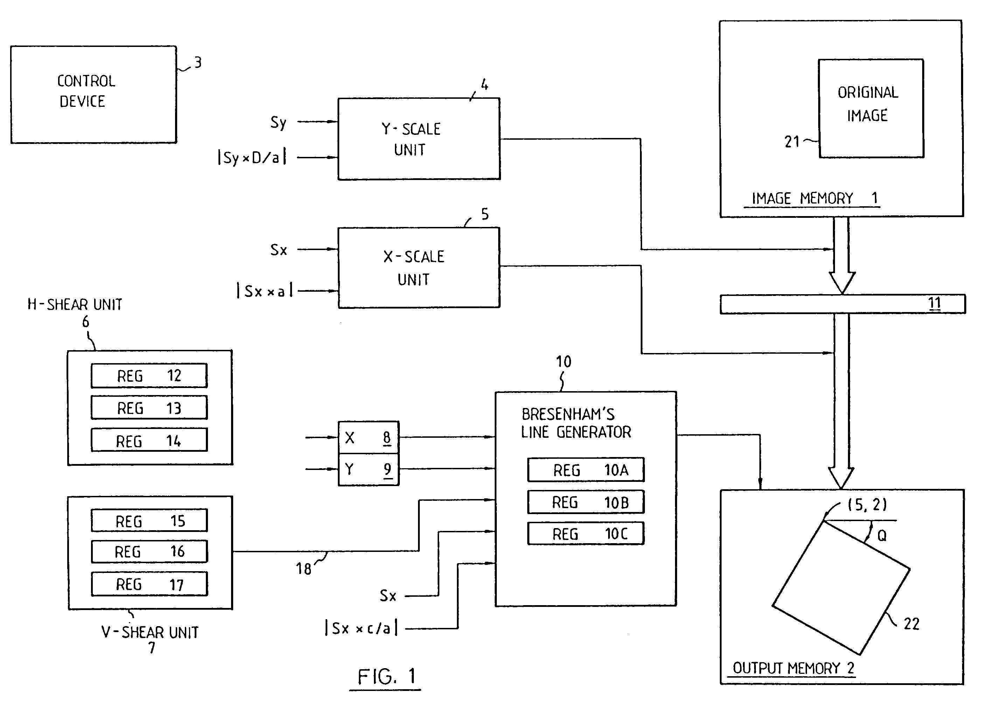

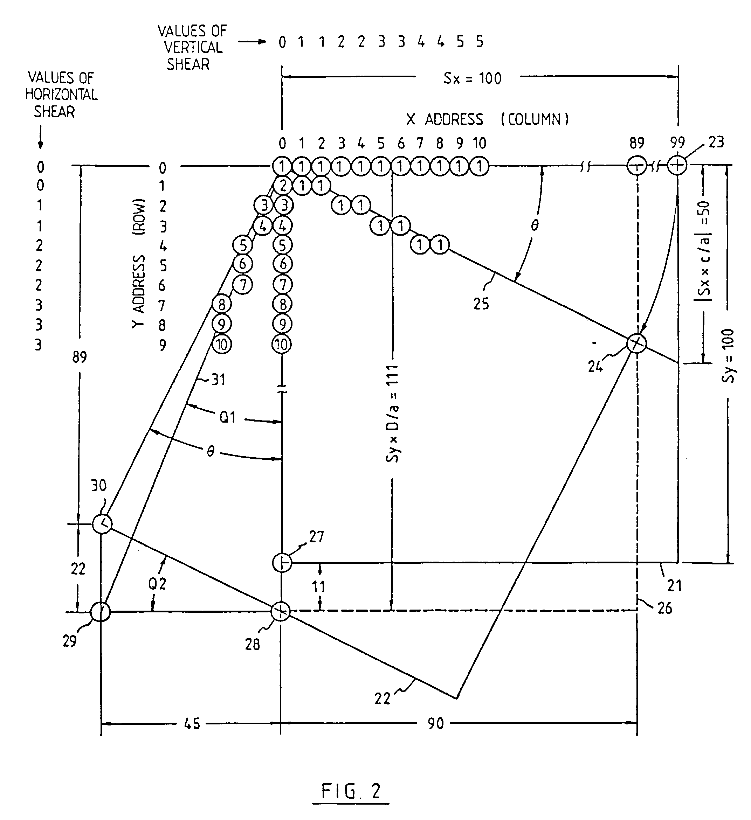

Refer now to Fig. 1 which shows a block diagram of a preferred embodiment of the image processing apparatus of the present invention. Fig. 2 shows the concept of image rotation using the Affine transformation in accordance with the present invention.

An original image 21 is stored in an image memory 1 and a rotated image 22 is stored in an output memory or output image memory 2.

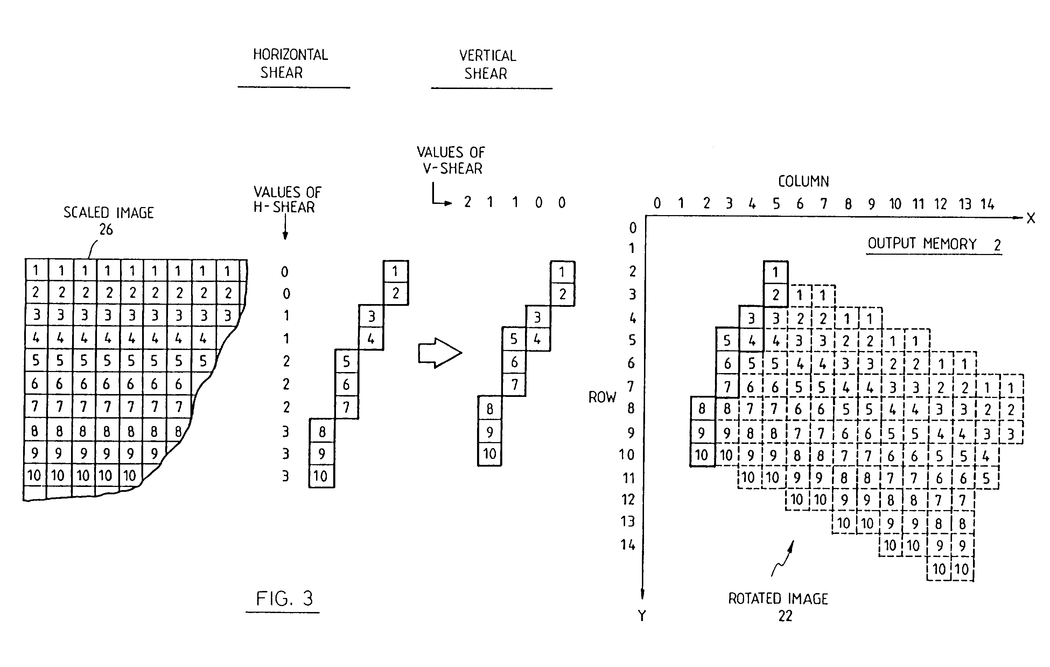

For the purposes of this illustration it is assumed that the size Sx or the number of pels in the X direction of the original image 21 is 100 pels and the size Sy in the Y direction is 100 pels; the rotation angle θ is equal to 26°; and the upper-left corner pel of the rotated image 22 is stored at an address (5,2) in the output memory 2, as shown in the Figs. 1 and 3.

The equation (5.3) described hereinbefore is used:

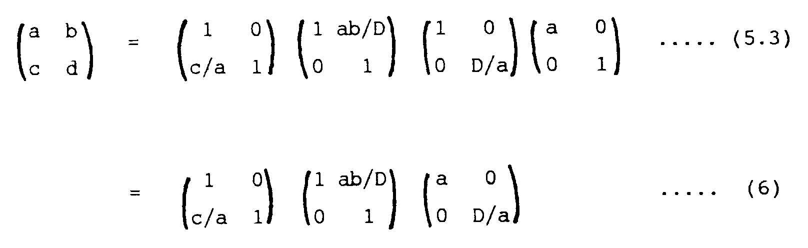

In a rotation of the image,

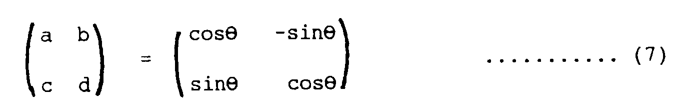

Since the angle θ = 26°,$\text{cos θ = 0.9}$$\text{sin θ = 0.45}$$\text{a = d = 0.9}$$\text{b = -0.45}$$\text{c = 0.45}$$\text{c/a = 0.5 = 1/2}$$\text{ab/D = -0.4 = -2/5}$

A control device 3, such as a microcomputer, generates various control signals, timing signals and control data which are applied to the blocks in Fig. 1 to control the operations of the blocks. To simplify the drawing, the connections between the control unit 3 and the blocks are not shown in Fig. 1.

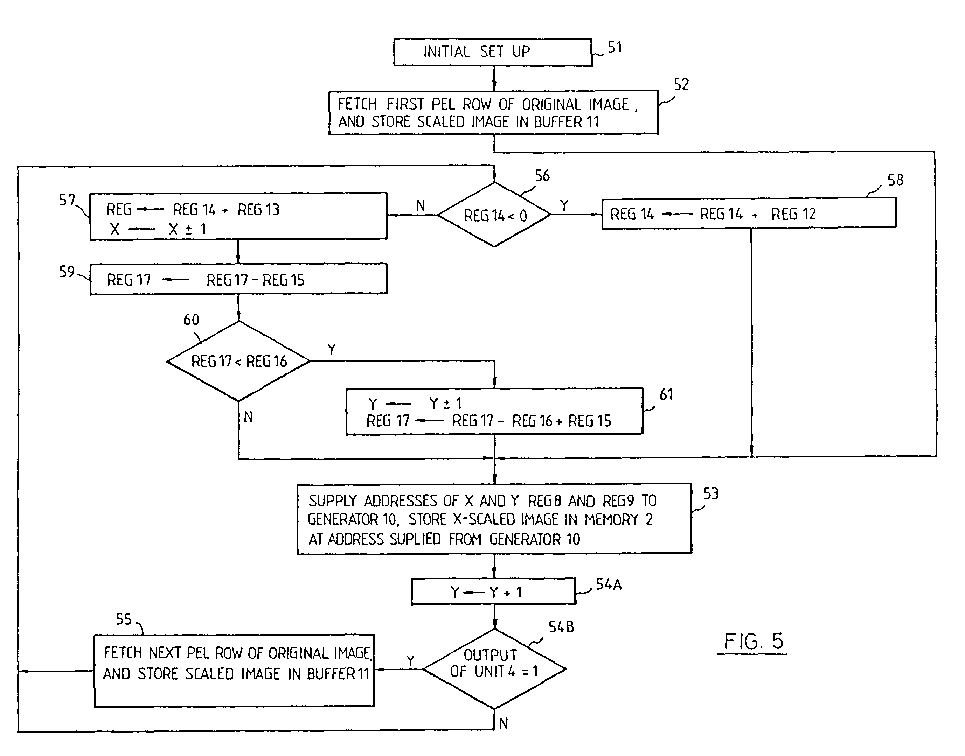

The control device 3 generates the following control data or parameters of Table 1 in an initial set-up period as shown in a block 51 in Fig. 5, and supplies them to the various units, as shown in Table 1.

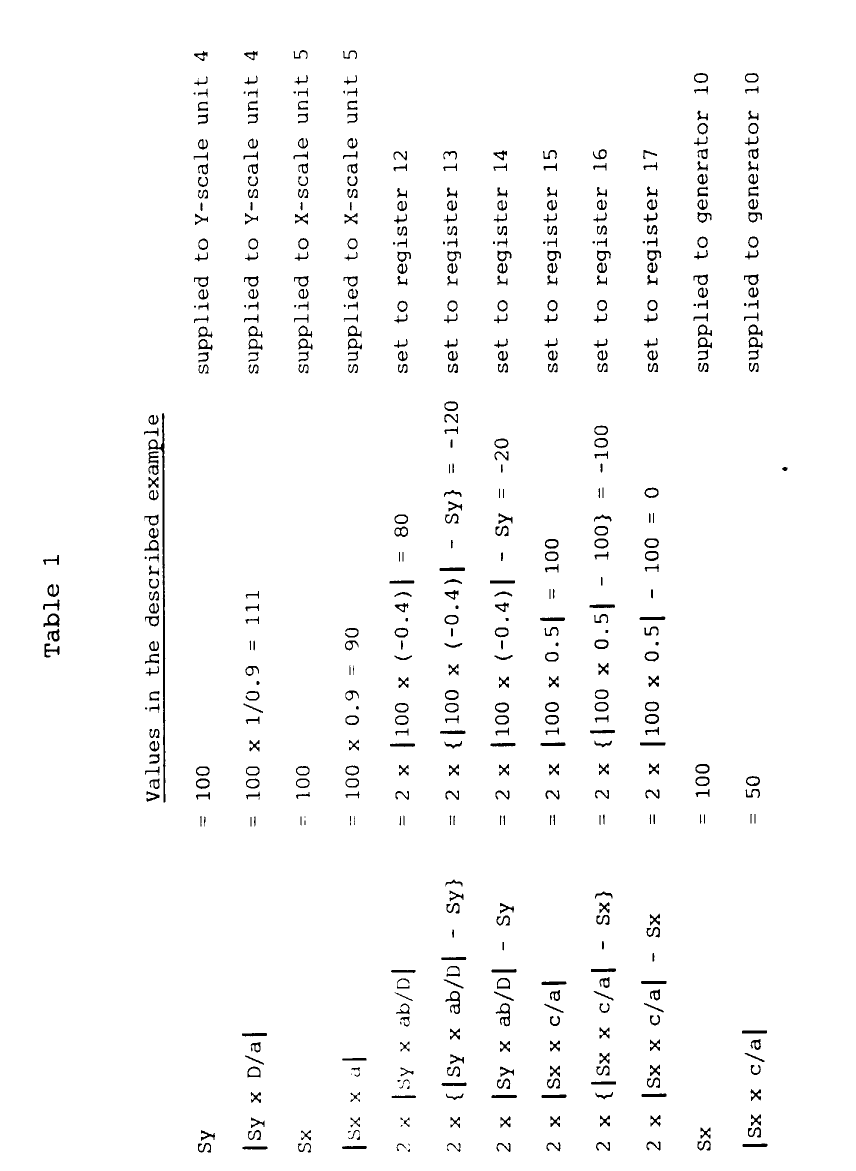

The value D/a is the scaling value in the Y or column direction, and the value a is the scaling value in the X or row direction. These values are dependent upon the rotation angle. The value ab/D is the value of the horizontal shear, and the value c/a is the value of the vertical shear. Again, these values are dependent upon the rotation angle.

The control device 3 also set the address (5,2) into X and Y address registers 8 and 9 in the block 51. That is, the initial value of the X address register 8 is "5", and the initial address of the Y address register 9 is "2".

The scaling of an original image using the Affine transformation is well known in the art, e.g. the IBM Technical Disclosure Bulletin, Vol. 28, No. 10, March 1986, pp. 4330 - 4331.

The number of pels in the X direction of the scaled image 26 is reduced to 90 pels, and the number of pels in the Y direction of the scaled image 26 is increased to 111 pels, as shown in Fig. 2. The reasons for the scale down in the X direction are that when the original image 21 is rotated by angle θ (θ = 26°), the rightmost pel 23 of the first pel row of the image 21 is moved to the pel 24, and since the pels on a display screen of the display device are arranged in the X-Y matrix, the rotated pel row on a line 25 is displayed by the 90 pels, as shown in the Fig. 2. The reasons for the scale up in the Y direction are that the total number of pels of the original image 21 should be substantially equal to the total number of pels of the rotated image 22.

Referring to Fig. 1, as each of the rows of the original image 21 is sequentially fetched from the image memory 1 and stored in one row buffer 11, the scale up in the Y direction of the original image is performed.

The scale ratio in the Y direction is represented by the value D/a in the third matrix of the equation (6). The Sy and |Sy x D/a| are applied to the Y-scale unit 4, as described hereinbefore. The value Sy represents the number of pels in the Y direction of the original image 21, and in the exemplary case, Sy = 100. The value |Sy x D/a| represents the number of pels in the Y direction of the scaled image 26. The value a = cosθ = 0.9 from the equations (7) and (8), and D = 1; therefore:$\text{|Sy x D/a| = 100 x 1.11 = 111 (pels)}$

That is, the 100 pel rows or lines of the original image 21 are scaled up or increased to the 111 pel rows by the Y-scale unit 4, as shown in the Fig. 2. To form the 111 pel rows, certain pel rows in the one row buffer 11 are used twice. The Y-scale unit 4 generates an output signal 1 which represents the fetching of the next pel row of the original image 21 into the one row buffer 11, or an output signal 0 which represents the fact that the next pel row of the original image 21 is not to be fetched. In the latter case the one pel row retained in the one row buffer 11 is used again to perform the double mapping operations of the one pel row into the output memory 2.

Describing the operations with reference to the flow chart of Fig. 5, the first pel row including the pels 1, 1, 1, 1 ..., 1 of the original image 21 in the Figs. 2 and 3 is stored in the one row buffer 11 in the block 52 of the Fig. 5 under the control of the control device 3.

It should be noted that:
(a) the pels in the first pel row of the original image 21 are indicated by the numerals 1, 1, 1, ..., 1, the pels in the second pel row are indicated by the numerals 2, 2, 2, ..., 2, the pels in the third pel row are indicated by the numerals 3, 3, 3, ..., 3, and so on, in the Figs. 2 and 3;
(b) these numerals are used to identify the pels in each pel row. In other words, the numerals do not represent the pel data of the pels, that is, each pel is represented by a binary 1 or 0;
(c) in the Fig. 2, the left-uppermost pel of the original image 21 and the left-uppermost pel of the rotated image 22 are located at the address (0, 0) for showing the relationship of both the images 21 and 22; and
(d) in order to simplify the present description, the scaling operations in the Y direction are not described during the processing of the 1 - 10 pel rows for simplifying the description.

The operation proceeds to block 53 of Fig. 5, wherein the address value 5 in the X address register 8 and the address value 2 in the Y register 9 shown in the Fig. 1 are supplied to the Bresenham's line generator 10, and the pels 1, 1, 1, ..., 1 of the first pel row of the original image 21 are fetched from the one row buffer 11 and are scaled down in the X direction by the X-scale unit 5. The scaled image of the first pel row is stored at addresses in the output memory 2, which are supplied by the Bresenham's line generator 10 under the control of the control device 3. It is noted that the parameters Sx = 100 and |Sx x c/a| = 50 are supplied to the Bresenham's line generator 10. The value 0 in the register 17 is also supplied to the Bresenham's line generator 10.

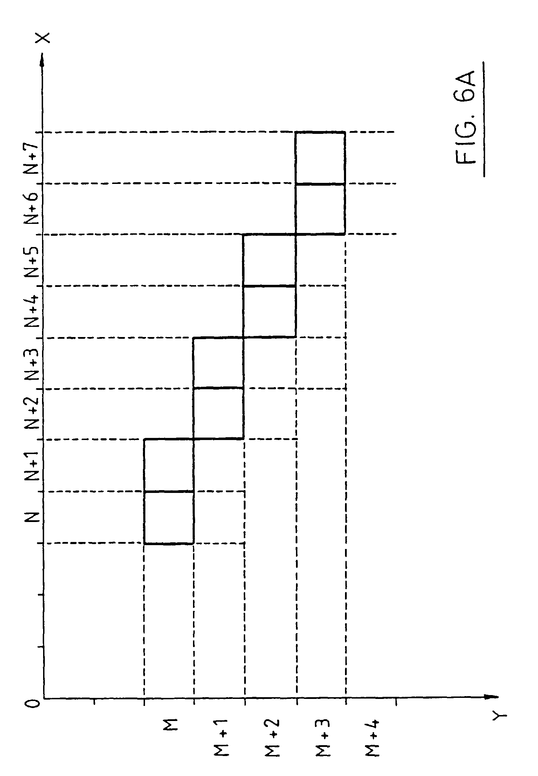

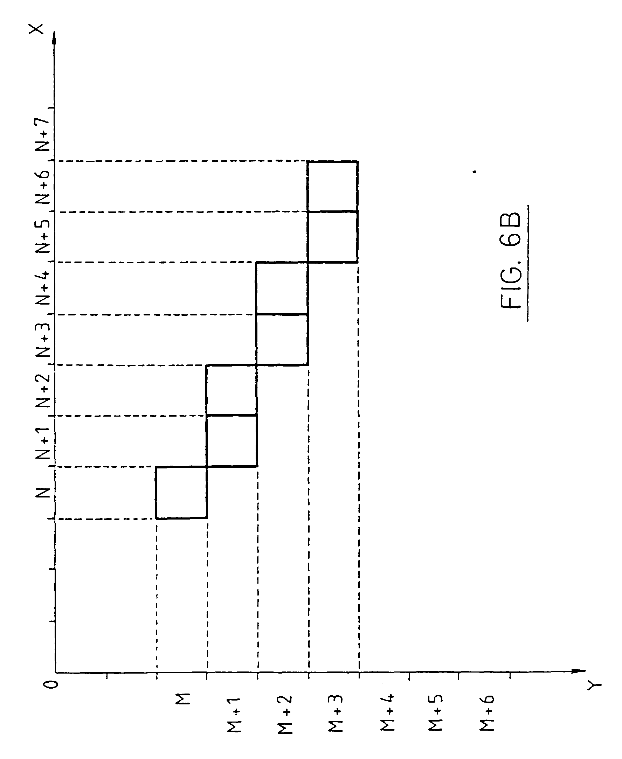

The generator 10 generates the first address sequence shown in Fig. 6A, (N, M), (N+1, M), (N+2, M+1), (N+3, M+1), (N+4, M+2), (N+5, M+2), (N+6, M+3), (N+7, M+3), or the second address sequence shown in Fig. 6B, (N, M), (N+1, M+1), (N+2, M+1), (N+3, M+2), (N+4, M+2), (N+5, M+3), ..., as the addresses of the pels of the pel row in the output memory 2 in response to the control value supplied from the register 17, as shown in Fig. 6. If the control value in the register 17, which is supplied to the Bresenham's line generator 10, is -100, which is described hereinafter, the line generator 10 generates the first address sequence. If the control value is 0, the line generator 10 generates the second address sequence. The value in the register 17 controls a vertical alignment of address transition of the adjacent pels in all the pel rows of the rotated image, as described hereinafter.

Since the value in the register 17 is 0 in this exemplary case, the Bresenham's line generator 10 generates the following second address sequence as the addresses of the pels in the first pel row, wherein the address (5, 2) in the X and Y registers 8 and 9 is used as the address of the first pel of the first pel row:
(5, 2), (6, 3), (7, 3), (8, 4),
(9, 4), (10, 5), (11, 5), ^{...}.

Also the scaled image or pels of the first pel row are mapped or stored in the above addresses in the output memory 2 under the control of the control device 3, as shown in the Fig. 3. Describing the operations of the Bresenham's line generator 10 with reference to the Fig. 2, for the first pel row, the line generator 10 generates the addresses in the output memory 2 located on a line 25. The Bresenham's algorithm is described in an article by J. E. Bresenham, IBM System Journal, Vol. 4, No. 1, 1965. Describing the operation of the X-scale unit 5 applied with the value Sx = 100 and the value |Sx x a| = 90, the X-scale unit 5 reduces the 100 pels of the pel row to 90 pels. As shown in Fig. 2, Sx represents the number of pels of one pel row in the X direction of the original image 21, and |Sx x a| represents the number of pels in one pel row of the rotated image 22.

Thus, the first pel row of the original image 21 is rotated and stored in the output memory 2, as shown by the numerals 1, 1, 1, ..., 1 in Figs. 2 and 3.

Describing the relationship between the register 17 and the Bresenham's line generator 10, the Bresenham's line generator 10 includes the three registers 10A, 10B and 10C which correspond to the three registers 15, 16 and 17 in the V-shear unit 7 or the registers 12, 13 and 14 in the H-shear unit 6, respectively. The values stored in the registers 10A, 10B and 10C are:$\text{Register 10A : 2 x |Sx x c/a|}$$\text{Register 10B : 2 x { |Sx x c/a| - Sx}}$$\text{Register 10C : 2 x |Sx x c/a| - Sx}$

The values correspond to the following known values of the Bresenham's algorithm as shown in James D. Foley and Andries Van Dam, Fundamentals of Interactive Computer Graphics, Addison-Wesley Publishing Co., 1982, pp. 433 - 436.$\text{2 x |Sx x c/a|} \text{= 2 x dy : Constant used for increment if d<0}$$\text{2 x { |Sx x c/a| - Sx}} \text{= 2 x (dy - dx) : Constant used for increment if d≥0}$$\text{2 x |Sx x c/a| - Sx} \text{= 2 x dy - dx = d : Initial value}$

Whether the Bresenham's line generator 10 generates the first address sequence shown in the Fig. 6A or the second address sequence shown in the Fig. 6B is decided by the value in register 17. In the present invention, the value is supplied from register 17 of the V-shear unit 7 to the register 10C of the Bresenham's line generator 10 for each pel row, so that all the pels in the rotated image 22 in the output memory 2 neighbour each other without any vacancy therebetween or without overlap of the image pels, as shown in the Fig. 3. Referring to Fig. 3, the address in the Y direction of all the pel rows is not incremented between the columns 2 and 3, between the columns 4 and 5, between the columns 6 and 7, etc, while an address increment in the Y direction in all the pel rows is made between the columns 3 and 4, between the columns 5 and 6, between the columns 7 and 8, etc.

For example, between column 5 and column 6, the Y address of the first and second pels of the first pel row, the Y address of the first and second pels of the second pel row, the Y address of the second and third pels of the third pel row, ^{...}, the Y address of the fourth and fifth pels of the tenth pel row are incremented; while, between the column 6 and the column 7, the Y address of the second and third pels of the first pel row, the Y address of the second and third pels of the second pel row, ^{...}, the Y address of the fifth and sixth pels of the tenth pel row are not incremented. The address transition between two adjacent pels in the pel row means (1) the increment of both the X and Y addresses or (2) the increment of the X address and no increment of the Y address. The address transitions of the horizontally adjacent pels in all the pel rows in the rotated image 22 are vertically aligned, so that there are no gaps in the rotated image 22, and an image pel of one pel row does not overlap an image pel of another pel row.

The vertical alignment of the address transition of the horizontally adjacent pels in all the pel row in the rotated image is performed by the control value in the register 17 in the Y-shear unit 7, which is supplied to the register 10C in the Bresenham's line generator 10 through the line 18 for each process of the pel line.

Returning to the description of the operation in Figure 5, the operation proceeds to block 54A, wherein the address value 2 in the Y register 9 is updated to Y + 1 = 3 by the control device 3.

The operation then proceeds to block 54B of the Fig. 5, wherein the control device 3 determines whether the output signal of the Y-scale unit 4 is a binary 1. A binary 1 represents the fetch of the next pel row of the original image 21 into the one row buffer 11. In the exemplary case, the answer to block 54B is YES, due to the assumption (d) described hereinbefore, and the operation proceeds to block 55, wherein the next pel row or second pel row represented by the pels 2, 2, 2, ^{...}, 2 is stored in the one row buffer 11 under the control of the control device 3.

The operation proceeds to block 56 in Fig. 5.

The operation of blocks 56 - 61 will now be described.

Blocks 56, 57 and 58 show the operations performed by the control device 3 which refers to the values in the registers 12, 13 and 14 in the H-shear unit 6. The H-shear unit 6 is also a Bresenham's line generator. The blocks 56, 57 and 58 determine whether or not a horizontal shear of the leftmost or first pel of pel row is required.

The blocks 59, 60 and 61 show the operations performed by the control device 3 which refers to the values in the registers 15, 16 and 17 in the V-shear unit 7. The V-shear unit 7 is also a Bresenham's line generator. The blocks 59, 60 and 61 determine whether or not a vertical shear of the horizontally sheared first pel of pel row is required.

Briefly describing the horizontal shear and vertical shear operations with reference to Figure 2, the left-lowermost pel 27 of the original image 21 is vertically moved to the position of the pel 28 by the Y-scale unit 4, as described hereinbefore. Next, the pel 28 is horizontally moved to the position of the pel 29, and the pel 29 is vertically moved to the position of pel 30. The horizontal movement means the horizontal shear operations, and the vertical movement means the vertical shear operations. The pel 30 is the left-lowermost pel of the rotated image 22. The first pel 27 is rotated to the position of pel 30 by the scaling operations represented by the third matrix of the equation (6), the horizontal shear operations represented by the second matrix of the equation (6), and the vertical shear operations represented by the first matrix of the equation (6). It is noted that the pels horizontally and vertically sheared are the only leftmost or first pels 2, 3, 4, 5, ^{...} 10, ^{...}, of the pel rows of the original image 21 In other words, the address in the output memory 2 of the first pel of each pel row is decided by both the horizontal and vertical shear operations in addition to the Y scale operations, and the addresses in the output memory 2 of the remaining pels following the first pel of each pel row are simply decided by the Bresenham's line generator 10.

The value or shift distance of the horizontal shear operations is decided by the value ab/D in the second matrix of equation 6. The value |ab/D| = 0.4 = 2/5 represents that the pel is horizontally moved on a line of gradient 2/5.

The value 2/5 substantially equals 45/111. The value 45 represents the shift distance between the pels 28 and 29, and the value 111 represents the position of the pel 28, as shown in the Fig. 2. Thus, the horizontal shear operations move pel 28 to the position of pel 29.

The value or distance of the vertical shear operations is decided by the value c/a in the first matrix of the equation (6). The value c/a = 0.5 = 1/2 represents the fact that the pel is vertically moved on an line of gradient 1/2. The value 1 represents the vertical movement, and the value 2 represents the horizontal movement. The value 1/2 substantially equals 22/45. The value 22 represents the distance between the pels 29 and 30, and the value 45 represents the distance between pels 28 and 29, as shown in the Fig. 2. Thus, the equation (6) rotates pel 28 to the position of pel 30.

Pels 1, 2, 3, ^{...}, 10 on line 31 in Fig. 2 indicating the horizontal shear operations are also shown in the Fig. 3. These pels are the leftmost pels of the pel rows. Pels 3 and 4 are horizontally moved by one pel position from the X position of pels 1 and 2, pels 5, 6 and 7 are horizontally moved by two pel positions from the X position of pels 1 and 2, and pels 8, 9 and 10 are horizontally moved by three pel positions from the X position of pels 1 and 2. The horizontal movements are shown as the values of H-shear in the Fig. 3.

To complete the rotation, pels 1, 2, ^{...}, 10 on the line 31 in the Fig. 2 are vertically sheared. The values of V-shear in the Fig. 3 represents the vertical movement of the pels. That is, the pels 1, 2, 3 and 4 are not vertically moved since the value of V-shear is 0. Pels 5, 6, 7, 8, 9 and 10 are vertically moved by one pel position since the value of V-shear is 1. The vertically sheared pels 1, 2, 3, ^{...}, 10 are the leftmost pels of the pel rows of the rotated image 22 stored in the output memory 2, as shown in Fig. 3.

Describing the blocks 56, 57 and 58, if the value in the register 14 is negative, the operations proceed to block 58, wherein the value in the register 12 is added to the current value in the register 14, and the value in the register 14 is replaced by the sum, so that the value in the register 14 is updated. If the answer to block 56 is NO, the operations proceed to block 57, wherein the value in the register 13 is added to the current value in the register 14 to update the value in the register 14, and the value in the X register 8 representing the X address of the leftmost pel of the row in the output memory 2 is incremented or decremented. The increment or decrement of the X address performs the X shear operation. It is noted that the X address is decremented in the clockwise rotation of the original image, as in the exemplary embodiment. In block 57, the horizontal shear is performed, and in block 58, the horizontal shear is not performed. Subsequent to the horizontal shear operations in block 57, the control device 3 determines whether or not the horizontally sheared first pel should be vertically sheared, through blocks 59, 60 and 61. In block 59, the control device 3 subtracts the value in the register 15 from the current value in the register 17, and replaces the current value by the resulting value so that the value in the register 17 is updated. Then, the control device 3 determines whether the value in register 17 is smaller than the value in register 16, in block 60. If the answer to block 60 is NO, the operations proceed to block 53. If the answer to block 60 is YES, the operations proceed to the block 61, wherein the control device 3 increments or decrements the value of the Y address register 9. In the exemplary case, register 9 is decremented. Also, the control device 3 subtracts the value in register 16 from the value in register 17 and adds the value in the register 15, and replaces the current value in the register 17 by the resultant value. The operation then proceeds to the block 53.

Returning to the description of the block 56 to start the processing of the second pel row which is now stored in the one row buffer 11, the values in the various registers at this step are, as shown in the Table 1:
Register 12: 80
Register 13: -120
Register 14: -20
Register 15: 100
Register 16: -100
Register 17: 0

The values in the X and Y registers 8 and 9, which represent the address of the first pel of the pel row, are 5 and 3 respectively. It is noted that the values in the registers 14 and 17 and the X and Y registers 8 and 9 are updated, while the values in the registers 12, 13, 15 and 16 are not changed.

The answer to block 56 is YES, since the value in the register 14 is -20. The current value -20 in the register 14 is updated to the new value -20+80 = 60 in the block 58. The operation proceeds to block 53, wherein the address value 5 in the X register 8 and the address value 3 in the Y register 9 are supplied to the Bresenham's line generator 10. The value in the register 17 supplied to the generator 10 is 0, so that the generator 10 the following second address sequence as the addresses of all the pels in the second pel row in the output memory 2, wherein the address (5, 3) in the X and Y registers 8 and 9 represents the address of the first pel of the second pel row:
(5, 3), (6, 4), (7, 4), (8, 5), (9, 5),
(10, 6), (11, 6), (12, 7), (13, 7), ^{...}

The scaled image or all the pels of the second pel row are mapped or stored in the above addresses in the output memory 2.

Next, the control device 3 increments the value in the Y register 9 from 3 to 4 in block 54A. The answer to block 54B is YES due to the assumption (d) described hereinbefore. The control device 3 stores the third pel row in the one row buffer 11, in block 55.

The operation loops back to block 56. The values in the registers 14 and 17 and the X and Y registers 8 and 9 are then as follows:
Register 14 : 60
Register 17 : 0
X register 8: 5
Y register 9 ^{...} 4

The answer to block 56 is NO. In block 57, the value -120 in the register 13 is added to the current value 60 in the register 14 to give the new value in register 14 of -60, and the value 5 in the X register 8 is decremented to the new value 4. And, in block 59, the value 100 in the register 15 is subtracted from the value 0 in register 17, so that the new value in register 17 is -100. In the next block 60, the value -100 in register 17 is compared with the value -100 in register 16. The answer to block 60 is NO, and the operation proceeds to the block 53.

The values at this step are:
Register 17 : -100
X register 8: 4
Y register 9: 4

In block 53, the Bresenham's line generator 10 generates the following address sequence for the third pel row in the output memory 2, in response to the above values:
(4, 4), (5, 4), (6, 5), (7, 5), (8, 6),
(9, 6), (10, 7), (11, 7), ^{...}

The scaled image or all the pels of the third pel row is stored in the above addresses in the output memory 2, as shown in Fig. 3.

In the next block 54A, the control device 3 increments the Y register 9 from 4 to 5. The answer to block 54B is YES due to the assumption (d) described hereinbefore. In the next block 55, the fourth pel row of the original image 21 is stored in the one row buffer 11. The operation then loops back to the block 56.

The values at this step are as follows:
X register 8: 4
Y register 9: 5
Register 14 : -60
Register 17 : -100

The answer to block 56 is YES. In the next block 58, the value -60 in the register 14 is changed to the new value 20. In the next block 53, the Bresenham's line generator 10 generates the following address sequence for the fourth pel row in the output memory 2, in response to the above values.
(4, 5), (5, 5), (6, 6), (7, 6), (8, 7),
(9, 7), (10, 8), (11, 8), ^{...}

The scaled image of the fourth pel row is stored in the above addresses in the output memory 2, as shown in Fig. 3.

In the next block 54A, the control device 3 increments the Y register 9 from 5 to 6.

The answer to block 54B is YES due to the assumption (d). In the next block 55, the fifth pel row of the original image 21 is stored in the one row buffer 11. The operation then loops back to block 56.

The values at this step are as follows:
X register 8: 4
Y register 9: 6
Register 14 : 20
Register 17 : -100

The answer to block 56 is NO. In the next block 57, the value -120 in register 13 is added to the current value 20 in register 14 and the new value -100 is stored in register 14, and the current value 4 in the X register 8 is decremented to the new value 3. In the next block 59, the value 100 in register 15 is subtracted from the current value -100 in register 17, and the resultant value -200 is stored in register 17. In the next block 60, the updated value -200 in the register 17 is compared with the value -100 in the register 16. The answer to block 60 is YES. In the block 61, the current value 6 in the Y register 9 is decremented to the new value 5, the value -100 in the register 16 is subtracted and the value 100 in the register 15 is added to the value -200 in the register 17, and the resultant value 0 is stored in the register 17.

The values at this step are as follows:
X register : 3
Y register : 5
Register 17: 0

The operation proceeds to the block 53, wherein the Bresenham's line generator 10 generates the following second address sequence of the fifth pel row in the output memory 2, in response to the above values:
(3, 5), (4, 6), (5, 6), (6, 7), (7, 7),
(8, 8), (9, 8), (10, 9), (11, 9), ^{...}

The scaled image of the fifth pel row is stored in the above addresses in the output memory, as shown in Fig. 3.

The above operations are repeated by the control of the control device 3 to complete the rotated image 22 in the output memory 2. When the last pel row of the scaled image has been stored in the output memory 2, this status is detected by the control device 3.

As apparent from the description hereinbefore, the invention uses the five Bresenham's line generators, i.e. two generators for the X-scale unit 4 and the Y-scale unit 5, two generators for the H-shear unit 6 and the V-shear unit 7, and one generator for the line generator 10. Only the first pel of each pel row in the X and Y scaled image 26 is sheared in both the X and Y directions.

Although the invention was described by using the example of rotating the original image by the angle 26° in the clockwise direction, it will be clear that the invention is applicable to any rotation angle.

Again, although the present invention has been described by using the hardware configuration as shown in Fig. 1, the invention could also be implemented by a combination of hardware and software. More particularly, the X scale operations and the line generating operations are performed by the X scale unit 4 and the Bresenham's line generator 10, while the Y scale operations and both the horizontal and vertical shear operations could be implemented by the software.

Another type of line generator could be used, which responds to the address of the first pel of a pel row and the value representing the vertical shear to generate the addresses of all the pels in the pel row.

Referring to the resultant rotated image 22 shown in the Fig. 3, all the pels neighbour each other without any vacancy therebetween or overlap of the image pels. This result is the same as the rotated image generated by the IBM Technical Disclosure Bulletin, Vol. 28, No. 10, March 1986, pp. 4330 - 4331 described hereinbefore. In this article, all the pels of the original image are sheared, so that the time period for generating the rotated image is much longer than that in the present invention. In other words, the present invention generates the rotated image with a shorter processing time.

## Claims

1. Image processing apparatus for rotating an original image (21) composed of picture elements arranged in rows and columns through a selected rotation angle and generating a rotated version (22) of the image in an output image memory (2), the apparatus comprising:
scaling means (4,5) for generating each row of a scaled version (42) of the original image (21) in response to scaling values calculated from the selected rotation angle;
characterised in that the apparatus comprises:
shearing means (6,7), responsive to values of horizontal and vertical shears determined by the selected rotation angle, for performing horizontal shear and vertical shear operations on the first picture element of each row of the scaled version (42) and generating respective addresses in the output image memory (2) into which the first picture elements after shearing are to be stored;
line generator means (10), responsive to the respective addresses of the first picture elements, the value of vertical shear and a control value generated by the V-shear unit, for generating addresses in the output image memory into which all the remaining picture elements of the rows of the scaled version are to be stored; and
control means (3) for storing all the first picture elements and all the remaining picture elements of the rows in the generated addresses of the output image memory (2) to produce the rotated version (22) of the original image (21).

2. An image processing apparatus as claimed in Claim 1, wherein the scaling means includes a Y-scale unit for scaling the original image in the column direction and an X-scale unit for scaling the original image in the row direction.

3. An image processing apparatus as claimed in Claim 1, wherein the shearing means for responding to values of horizontal and vertical shears includes an H-shear unit which performs the horizontal shear operations on the first picture element from each row and a V-shear unit which performs the vertical shear operations on the horizontally sheared picture element and generates said control value.

4. An image processing apparatus as claimed in Claim 3, wherein address transitions of horizontally adjacent picture elements in all the rows in the rotated image in the output image memory are vertically aligned.

5. A method for rotating an original image (21) composed of picture elements arranged in rows and columns through a selected rotation angle and generating a rotated version (22) of the image in an output image memory (2), the method comprising:
generating each row of a scaled version (42) of the original image (21) in response to scaling values calculated from the selected rotation angle; characterised in that the method comprises:
performing, in response to values of horizontal and vertical shears determined by the selected rotation angle, horizontal shear and vertical shear operations on the first picture element of each row of the scaled version (42);
generating respective addresses in the output image memory (2) into which the first picture elements after shearing are to be stored;
generating, in response to the respective addresses of the first picture elements, the value of vertical shear and a control value generated with the vertical shear, addresses in the output image memory into which all the remaining picture elements of the rows of the scaled version are to be stored; and
storing all the first picture elements and all the remaining picture elements of the rows in the generated addresses of the output image memory (2) to produce the rotated version (22) of the original image (21).

## Patentansprüche

1. Bildverarbeitungsvorrichtung, die dazu dient, ein ursprüngliches Bild (21), das aus in Zeilen und Spalten angeordneten Bildelementen besteht, um einen ausgewählten Drehwinkel zu drehen und um eine gedrehte Version (22) des Bildes in einem Ausgangsbildspeicher (2) zu erzeugen, wobei die Vorrichtung folgendes umfaßt:
Skalierungsmittel (4, 5), um als Antwort auf Skalierungswerte, die aus dem ausgewählten Drehwinkel berechnet werden, jede Zeile einer maßstäblich geänderten Version (42) des ursprünglichen Bildes (21) zu erzeugen; dadurch gekennzeichnet, daß die Vorrichtung folgendes umfaßt:
Aufspaltungsmittel (6, 7), die auf Werte von waagerechten und senkrechten Aufspaltungen, welche von dem ausgewählten Drehwinkel bestimmt werden, ansprechen, um am ersten Bildelement einer jeden Zeile der maßstäblich geänderten Version (42) waagerechte und senkrechte Aufspaltungsoperationen auszuführen und um im Ausgangsbildspeicher (2) entsprechende Adressen zu erzeugen, in denen die ersten Bildelemente nach dem Aufspalten gespeichert werden sollen;
ein Zeilengeneratormittel (10), das auf die entsprechenden Adressen der ersten Bildelemente, den Wert der senkrechten Aufspaltung und einen von der V-Aufspaltungseinheit erzeugten Steuerwert anspricht, um im Ausgangsbildspeicher (2) Adressen zu erzeugen, in denen alle restlichen Bildelemente der Zeilen der maßstäblich geänderten Version (42) gespeichert werden sollen; und
ein Steuermittel (3) zur Speicherung aller ersten Bildelemente und aller restlichen Bildelemente der Zeilen in den erzeugten Adressen des Ausgangsbildspeichers (2), um die gedrehte Version (22) des ursprünglichen Bildes (21) zu erzeugen.

2. Bildverarbeitungsvorrichtung wie in Anspruch 1 beansprucht, wobei das Skalierungsmittel eine Y-Skaleneinheit zur Skalierung des ursprünglichen Bildes (21) in der Spaltenrichtung und eine X-Skaleneinheit zur Skalierung des ursprünglichen Bildes (21) in der Zeilenrichtung einschließt.

3. Bildverarbeitungsvorrichtung wie in Anspruch 1 beansprucht, wobei das Aufspaltungsmittel zum Ansprechen auf Werte von waagerechten und senkrechten Aufspaltungen eine H-Aufspaltungseinheit, welche die waagerechten Aufspaltungsoperationen an dem ersten Bildelement von jeder Zeile ausführt, und eine V-Aufspaltungseinheit, welche die senkrechten Aufspaltungsoperationen an dem waagerecht aufgespalteten Bildelement ausführt und den Steuerwert erzeugt, einschließt.

4. Bildverarbeitungsvorrichtung wie in Anspruch 3 beansprucht, wobei Adressenübergänge von waagerecht benachbarten Bildelementen in allen Zeilen in dem gedrehten Bild im Ausgangsbildspeicher (2) senkrecht ausgerichtet werden.

5. Verfahren zur Drehung eines ursprünglichen Bildes (21), das aus in Zeilen und Spalten angeordneten Bildelementen besteht, um einen ausgewählten Drehwinkel und zur Erzeugung einer gedrehten Version (22) des Bildes in einem Ausgangsbildspeicher (2), wobei das Verfahren folgendes umfaßt:
Erzeugen einer jeden Zeile einer maßstäblich geänderten Version (42) des ursprünglichen Bildes (21) als Antwort auf Skalierungswerte, die aus dem ausgewählten Drehwinkel berechnet werden; dadurch gekennzeichnet, daß das Verfahren folgendes umfaßt:
als Antwort auf Werte von waagerechten und senkrechten Aufspaltungen, die von dem ausgewählten Drehwinkel bestimmt werden, Ausführen von waagerechten und senkrechten Aufspaltungsoperationen an dem ersten Bildelement einer jeden Zeile der maßstäblich geänderten Version (42);
Erzeugen von entsprechenden Adressen im Ausgangsbildspeicher (2), in denen die ersten Bildelemente nach der Aufspaltung gespeichert werden sollen;
als Antwort auf die entsprechenden Adressen der ersten Bildelemente, den Wert der senkrechten Aufspaltung und einen mit der senkrechten Aufspaltung erzeugten Steuerwert Erzeugen von Adressen im Ausgangsbildspeicher (2), in denen alle restlichen Bildelemente der Zeilen der maßstäblich geänderten Version (42) gespeichert werden sollen; und
Speichern aller ersten Bildelemente und aller restlichen Bildelemente der Zeilen in den erzeugten Adressen des Ausgangsbildspeichers (2), um die gedrehte Version (22) des ursprünglichen Bildes (21) zu erzeugen.

## Revendications

1. Appareil de traitement d'image pour faire tourner une image d'origine (21) constituée d'éléments d'image disposés en rangées et colonnes sur un angle de rotation sélectionné et produire une version tournée (22) de l'image dans une mémoire d'image de sortie (2), l'appareil comprenant :
un moyen de changement d'échelle (4, 5) pour produire chaque rangée d'une version changée d'échelle (42) de l'image d'origine (21) en réponse à des valeurs de changement d'échelle calculées à partir de l'angle de rotation sélectionné ; caractérisé en ce que l'appareil comprend :
un moyen de décalage (6, 7) sensible aux valeurs de décalage horizontal et vertical déterminées par l'angle de rotation sélectionné pour effectuer des opérations de décalage horizontal et de décalage vertical sur le premier élément d'image de chaque rangée de la version changée d'échelle (42) et produire des adresses respectives dans la mémoire d'image de sortie (2) dans laquelle les premiers éléments d'image après décalage doivent être mémorisés ;
un moyen de générateur de ligne (10) répondant aux adresses respectives des premiers éléments d'image, à la valeur de décalage vertical et à une valeur de commande produite par l'unité de décalage V pour produire des adresses dans la mémoire d'image de sortie dans laquelle tous les éléments d'image restants des rangées de la version changée d'échelle doivent être mémorisés, et
un moyen de commande (3) pour mémoriser la totalité des premiers éléments d'image et la totalité des éléments d'image restants des rangées dans les adresses générées de la mémoire d'image de sortie (2) afin de produire la version tournée (22) de l'image d'origine (21).

2. Appareil de traitement d'image selon la revendication 1, dans lequel le moyen de changement d'échelle comprend une unité de changement d'échelle Y pour changer l'échelle de l'image d'origine dans la direction des colonnes et une unité de changement d'échelle X pour changer l'échelle de l'image d'origine dans la direction des rangées.

3. Appareil de traitement d'image selon la revendication 1 dans lequel le moyen de décalage pour répondre aux valeurs des décalages horizontal et vertical comprend une unité de décalage H qui effectue les opérations de décalage horizontal sur le premier élément d'image à partir de chaque rangée et une unité de décalage V qui effectue les opérations de décalage vertical sur l'élément d'image horizontalement décalé et produit ladite valeur de commande.

4. Appareil de traitement d'image selon la revendication 3, dans lequel des transitions d'adresse des éléments d'image horizontalement adjacents dans la totalité des rangées dans l'image tournée dans la mémoire d'image de sortie sont verticalement alignées.

5. Procédé pour faire tourner une image d'origine (21) constituée d'éléments d'image disposés en rangées et colonnes sur un ange de rotation sélectionné et produire une version tournée (22) de l'image dans une mémoire d'image de sortie (2) le procédé comprenant les étapes consistant à :
générer chaque rangée d'une version changée d'échelle (42) de l'image d'origine (21) en réponse à des valeurs de changement d'échelle calculées à partir de l'angle de rotation sélectionné ; caractérisé en ce que le procédé comprend les étapes consistant à :
effectuer, en réponse à des valeurs de décalages horizontal et vertical déterminées par l'angle de rotation sélectionné, des opérations de décalage horizontal et de décalage vertical sur le premier élément d'image de chaque rangée de la version changée d'échelle (42) ;
générer des adresses respectives dans la mémoire d'image de sortie (2) dans laquelle les premiers éléments d'image après décalage doivent être mémorisés ;
générer, en réponse aux adresses respectives des premiers éléments d'image la valeur du décalage vertical et une valeur de commande produite avec le décalage vertical, les adresses dans la mémoire d'image de sortie dans laquelle la totalité des éléments d'image restants des rangées de la version changée d'échelle doivent être mémorisés, et
mémoriser la totalité des premiers éléments d'image et la totalité des éléments d'image restants des rangées dans les adresses générées de la mémoire d'image de sortie (2) afin de produire la version tournée (22) de l'image d'origine (21).
